# EUROPEAN PATENT APPLICATION

(11) **EP 4 560 716 A1**
(43) Date of publication of application: **28.05.2025**
(21) Application number: 24212561.5
(22) Date of filing: 13.11.2024
(51) Int. Cl.: H01M 4/04, B21B 27/00

(54) **APPARATUS AND METHOD FOR MANUFACTURING ELECTRODE AND ELECTRODE MANUFACTURED THEREBY**

(30) Priority: 22.11.2023 KR 20230163396
(71) Applicant: Samsung SDI Co., Ltd., Gyeonggi-do 17084 (KR)
(72) Inventor: Lee, Seung Hun, Suwon-si, Gyeonggi-do 16678 (KR); Park, Gwang Won, Suwon-si, Gyeonggi-do 16678 (KR); Jung, Da Eun, Suwon-si, Gyeonggi-do 16678 (KR); Lee, Mi Young, Suwon-si, Gyeonggi-do 16678 (KR)
(74) Representative: Gulde & Partner

(57) **Abstract**

An apparatus and method for manufacturing an electrode and an electrode manufactured thereby. The electrode manufacturing apparatus includes rollers including a first roller having at least one first surface treatment region on at least part of a surface thereof and a second roller spaced apart from the first roller and rotating in a different direction from the first roller; a film conveyor conveying a freestanding film toward the first roller; and a collector conveyor conveying a current collector toward a gap between the first roller and the second roller to stack the current collector on one surface of the freestanding film by the rollers.

## Description

### BACKGROUND

### 1. Field of the Invention

The present invention relates to an apparatus and method for manufacturing an electrode and an electrode manufactured by the apparatus and/or the method.

### 2. Description of the Related Art

In recent years, demand for high energy density and high capacity secondary batteries has grown rapidly with rapid spread of electronic devices using batteries, such as mobile phones, notebook computers, and electric vehicles. Thus, various research and development has been actively carried out to improve lithium secondary batteries.

A lithium secondary battery includes a cathode and an anode, which contains active materials allowing intercalation and deintercalation of lithium ions, and an electrolyte, and produces electrical energy through oxidation and reduction upon intercalation/deintercalation of lithium ions in the cathode and the anode.

Here, the cathode and/or the anode typically includes a current collector and an active material layer coated on the current collector. The active material layer is typically prepared in slurry form. A method of coating the active material layer in slurry form onto the current collector is referred to as a wet process. The wet process allows easy extraction of metals from waste batteries. However, the wet process requires heat treatment at high temperature to dry the active material layer with a slurry phase. As a result, the wet process has problems of high manufacturing costs and difficulty in improving productivity.

Accordingly, a dry process, in which the active material layer is formed using a dry mixture, has emerged in recent years. However, the dry process can produce dry electrode plates only in a stripe film shape through a continuous process by roll calendering, thereby causing a limit in application of the dry electrode plates to various cell form factors.

Therefore, there is a need to develop a technique for application of dry electrode plates to various cell form factors.

### SUMMARY OF THE INVENTION

It is one aspect of the present invention to provide an electrode plate having a pattern formed on one side thereof.

It is another aspect of the present invention to provide a manufacturing apparatus and/or a manufacturing method that can produce dry electrode plates applicable to various cell form factors.

The above and other aspects and features of the present invention will become apparent from the following description of embodiments of the present invention.

In accordance with one or more embodiments of the present invention, there is provided an electrode manufacturing apparatus including: rollers including a first roller having at least one first surface treatment region on at least part of a surface thereof and a second roller spaced apart from the first roller and rotating in a different direction from the first roller; a film conveyor conveying a freestanding film toward the first roller; and a collector conveyor conveying a current collector toward a gap between the first roller and the second roller to stack the current collector on a surface of the freestanding film by the rollers.

Thereby, an efficient and cost effective production of a current collector is realized.

In accordance with one or more embodiments of the present invention, there is provided an electrode manufacturing method including: applying a shear force to a dry mixture to produce a freestanding film; conveying the freestanding film toward a first roller having a surface treatment region formed thereon to form a pattern on the freestanding film; and conveying a current collector toward the first roller and a second roller adjacent to the first roller to stack the freestanding film on the current collector.

In accordance with one or more embodiments of the present invention, there is provided an electrode manufactured by the electrode manufacturing apparatus and including: a current collector; and a freestanding film stacked on the current collector and having a pattern formed on a surface thereof.

According to one or more embodiments, the electrode manufacturing apparatus and/or the electrode manufacturing method according to embodiments of the present invention can manufacture electrode plates having a pattern formed thereon.

According to one or more embodiments, the electrode manufacturing apparatus and/or the electrode manufacturing method according to embodiments of the present invention can manufacture electrode plates applicable to various cell form factors.

According to one or more embodiments, an electrode may have a pattern formed on at least one side thereof.

According to another embodiment, the electrode includes a current collector; and a freestanding film stacked on the current collector and having a pattern formed on a surface thereof.

However, aspects and features of the invention are not limited to those described above and other aspects and features not mentioned will be clearly understood by those skilled in the art from the detailed description given below.

### BRIEF DESCRIPTION OF THE DRAWINGS

The following drawings attached to this specification illustrate some example embodiments of the present invention, and further describe aspects and features of the present invention together with the detailed description of the present invention. However, the present invention should not be construed as being limited to the drawings:
FIG. 1 to FIG. 4 are schematic cross-sectional views of lithium secondary batteries according to some embodiments of the present invention;
FIG. 5 is a view of an electrode manufacturing apparatus according to an embodiment of the present invention;
FIG. 6 is a flowchart illustrating an electrode manufacturing method according to an embodiment of the present invention;
FIG. 7A to FIG. 7C are views of protrusions according to some embodiments of the present invention;
FIG. 8A to FIG. 8C are views of protrusions according to some embodiments of the present invention;
FIG. 9A to FIG. 9C are views of a roller and a surface treatment region according to some embodiment of the present invention;
FIG. 10 is a view of an electrode manufacturing apparatus according to an embodiment of the present invention; and
FIG. 11A and FIG. 11B are views of an electrode according to some embodiments of the present invention.

### DETAILED DESCRIPTION OF EXEMPLARY EMBODIMENTS

Hereinafter, some example embodiments of the present invention will be described in detail with reference to the accompanying drawings. However, it should be understood that the following embodiments are provided by way of illustration and the present invention is not limited thereto and is defined by the appended claims and equivalents thereto.

When an arbitrary element is referred to as being disposed (or located or positioned) "above" (or "below") or "on" (or "under") a component, it may mean that the arbitrary element is placed in contact with the upper (or lower) surface of the component and may also mean that another component may be interposed between the component and any arbitrary element disposed (or located or positioned) on (or under) the component

Throughout the specification, unless specified otherwise, each element may be singular or plural. In addition, throughout the specification, when "A and/or B" is stated, it means A, B or A and B, unless specified otherwise.

As used herein, "combinations thereof" may refer to mixtures, stacks, composites, copolymers, alloys, blends, and reaction products of components.

Unless otherwise defined herein, particle diameter may refer to an average particle diameter. In addition, the particle diameter means an average particle diameter (D50) that refers to a particle diameter corresponding to 50% by volume in a volume cumulative distribution of corresponding particles. The average particle diameter may be measured by any method well known in the art, for example, by a particle size analyzer, a transmission electron microscope image or a scanning electron microscope image. Alternatively, the average particle diameter (D50) may be measured by counting the number of particles in each particle diameter range using a device employing a dynamic light-scattering method to analyze data, followed by calculating the average particle diameter (D50)-based on the analyzed data. Alternatively, the average particle diameter (D50) may be measured by laser diffraction. More specifically, in measurement by laser diffraction, target particles are dispersed in a dispersant, introduced into a commercially available laser diffraction particle analyzer (for example, Microtrac MT 3000), and irradiated with ultrasound waves of about 28 kHz at a power of 60 W, followed by calculating the average particle size (D50) corresponding to 50 vol% by volume in the cumulative volume distribution of the particles in the measurement device.

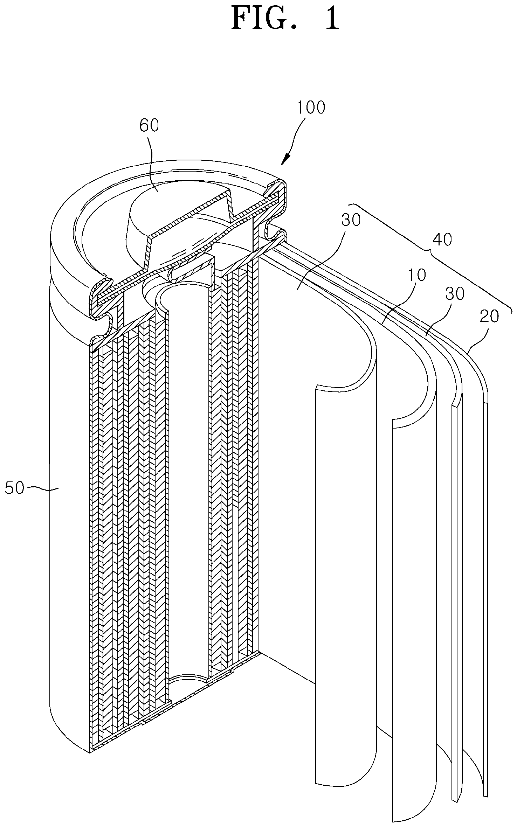

FIG. 1 to FIG. 4 are schematic cross-sectional views of lithium secondary batteries according to embodiments of the present invention.

### Lithium secondary battery 100

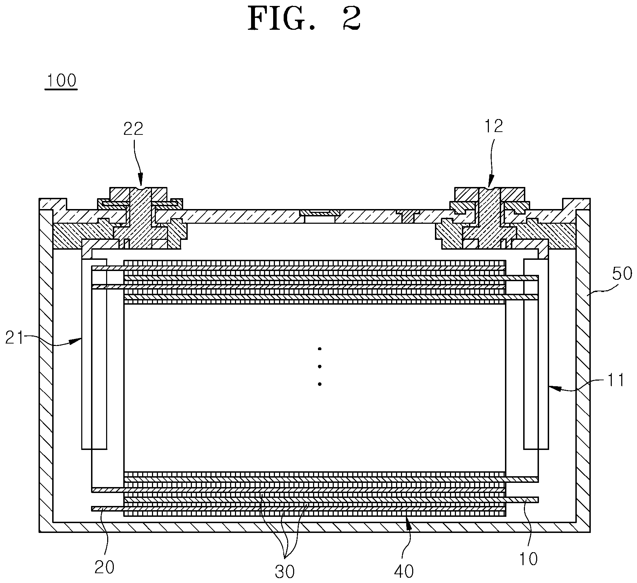

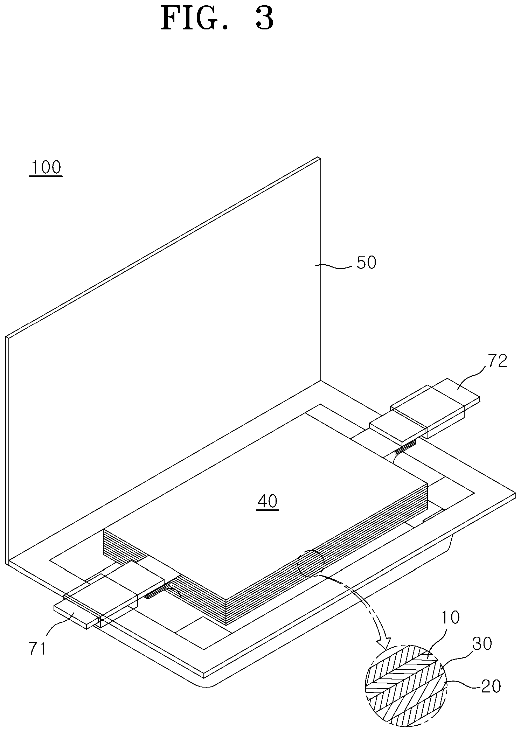

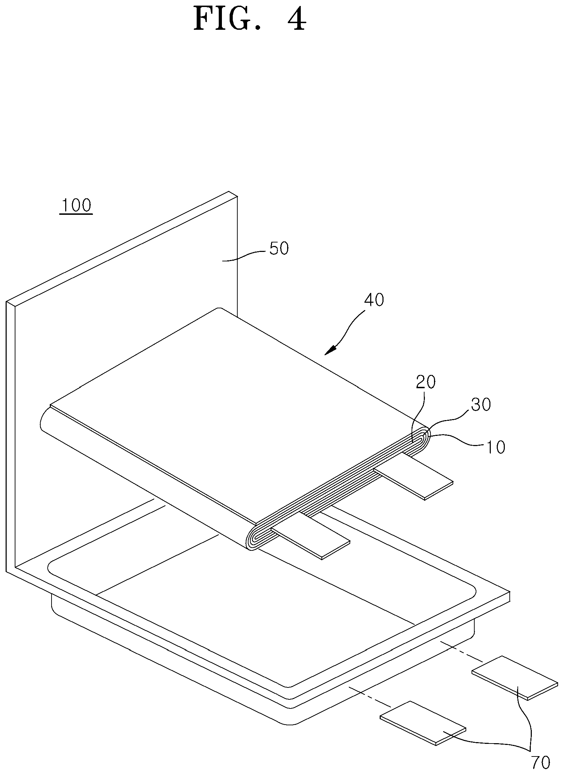

Lithium secondary batteries may be classified into a cylindrical secondary battery, a faceted secondary battery, a pouch type secondary battery, a coin type secondary battery, and the like based on the shapes thereof. FIG. 1 to FIG. 4 are schematic views of lithium secondary batteries according to some embodiments of the present invention, in which FIG. 1 shows a cylindrical secondary battery, FIG. 2 shows a faceted or prismatic secondary battery, and FIG. 3 and FIG. 4 show pouch-type secondary batteries. Referring to FIG. 1 to FIG. 4, a lithium secondary battery 100 may include an electrode assembly 40 in which a separator 30 is interposed between a cathode 10 and an anode 20, and a case 50 that receives the electrode assembly 40 therein. The cathode 10, the anode 20, and the separator 30 may be embedded in an electrolyte (not shown). The lithium secondary battery 100 may include a sealing member 60 that seals the case 50, as shown in FIG. 1. In an embodiment, as shown in FIG. 2, the lithium secondary battery 100 may include a cathode lead tab 11, a cathode terminal 12, an anode lead tab 21, and an anode terminal 22. As shown in FIG. 3 and FIG. 4, the lithium secondary battery 100 may include electrode tabs 70, that is, a cathode tab 71 and an anode tab 72, which function as electrical pathways conducting current formed in the electrode assembly 40 to the outside.

### Cathode material

As a cathode material, a compound allowing reversible intercalation and deintercalation of lithium (lithiated intercalation compound) may be used. In an embodiment, the cathode material may be at least one complex oxide of a metal selected from among cobalt, manganese, nickel and combinations thereof with lithium.

The composite oxide may be a lithium transition metal composite oxide. In an embodiment, the composite oxide may be a lithium nickel oxide, a lithium cobalt oxide, a lithium manganese oxide, a lithium iron phosphate compound, a cobalt-free nickel-manganese oxide, or a combination thereof.

By way of example, the composite oxide may be a compound represented by any of the following formulas: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li _{(3-f)}Fe₂ (PO₄)₃ (0≤f≤2); and LiₐFePO₄ (0.90≤a≤1.8).

In the above formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

In an embodiment, the cathode material may be a high nickel-content cathode material containing 80 mol% or more, 85 mol% or more, 90 mol% or more, 91 mol% or more, or 94 mol% to 99 mol% of nickel relative to 100 mol% of metal excluding lithium in the lithium transition metal complex oxide. The high nickel-content cathode material can achieve high capacity and thus can be applied to high capacity/high density lithium secondary batteries.

### Cathode 10

The cathode 10 for the lithium secondary battery 100 may include a current collector and a cathode active material layer formed on the current collector. The cathode material layer includes a cathode material and may further include a binder and/or a conductive material.

In an embodiment, the cathode may further include an additive capable of acting as a sacrificial cathode.

In an embodiment, the cathode material may be present in an amount of 90 wt% to 99.5 wt%-based on 100 wt% of the cathode material layer and each of the binder and the conductive material may be present in an amount of 0.5 wt% to 5 wt%-based on 100 wt% of the cathode material layer.

The binder serves to attach cathode material particles to each other while attaching the cathode material to the current collector.

The binder may include, for example, polyvinyl alcohol, carboxymethylcellulose, hydroxypropylcellulose, diacetylcellulose, polyvinyl chloride, carboxylated polyvinyl chloride, polyvinyl fluoride, polymers including ethylene oxide, polyvinyl pyrrolidone, polyurethane, polytetrafluoroethylene, polyvinylidene fluoride, polyethylene, polypropylene, styrene-butadiene rubbers, (meth)acrylated styrene-butadiene rubbers, epoxy resins, (meth)acrylic resins, polyester resins, Nylon, and the like, without being limited thereto.

In another embodiment, the binder may include any binder that becomes fibers under shear. For example, the binder may include polytetrafluoroethylene (PTFE), polyvinylidene fluoride (PVdF), vinylidene fluoride-hexafluoropropylene copolymer, polyacrylonitrile, polyolefin, and/or mixtures thereof.

The conductive material serves to impart conductivity to the electrodes and may be any electrically conductive material that does not cause chemical change in cells under construction. The conductive material may include, for example, carbon materials, such as natural graphite, artificial graphite, carbon black, acetylene black, Ketjen black, carbon fiber, carbon nanofibers, carbon nanotubes, and the like; metal-based materials in the form of metal powders or metal fibers containing copper, nickel, aluminum, silver, and the like; conductive polymers, such as polyphenylene derivatives and the like; and/or mixtures thereof.

The current collector may be Al, without being limited thereto.

### Anode material

The anode material includes a material allowing reversible intercalation/deintercalation of lithium ions, lithium metal, lithium metal alloy, a material capable of being doped to lithium and de-doped therefrom, or a transition metal oxide.

The material allowing reversible intercalation/deintercalation of lithium ions may include a carbon-based anode material, for example, crystalline carbon, amorphous carbon, or a combination thereof. The crystalline carbon may include, for example, graphite, such as natural graphite or artificial graphite, in amorphous, plate, flake, spherical, or fibrous form, and the amorphous carbon may include, for example, soft carbon, hard carbon, mesoporous pitch carbides, calcined coke, and the like.

The lithium metal alloy may be an alloy of lithium and a metal selected from among Na, K, Rb, Cs, Fr, Be, Mg, Ca, Sr, Si, Sb, Pb, In, Zn, Ba, Ra, Ge, Al and Sn may be used.

In an embodiment, the material capable of being doped to lithium and de-doped therefrom may be an Si-based anode material or an Sn-based anode material. The Si-based anode material may be silicon, a silicon-carbon composite, SiOₓ (0<x<2), Si-Q alloys (where Q is selected from among alkali metals, alkali-earth metals, Group XIII elements, Group XIV elements (excluding Si), Group XV elements, Group XVI elements, transition metals, rare-earth elements, and combinations thereof), or combinations thereof. The Sn-based anode material may be Sn, SnO₂, an Sn alloy, or a combination thereof.

The silicon-carbon composite may be a composite of silicon and amorphous carbon. According to an embodiment, the silicon-carbon composite may be prepared in the form of silicon particles having an amorphous carbon coating formed on the surface thereof. For example, the silicon-carbon composite may include secondary particles (cores) composed of primary silicon particles and an amorphous carbon coating layer (shell) formed on the surface of the secondary particle. The amorphous carbon may also be placed between the primary silicon particles such that, for example, the primary silicon particles are coated with amorphous carbon. The secondary particles may be dispersed in an amorphous carbon matrix.

The silicon-carbon composite may further include crystalline carbon. For example, the silicon-carbon composite may include a core containing crystalline carbon and silicon particles, and an amorphous carbon coating layer formed on the core.

In an embodiment, the Si-based anode material or the Sn-based anode material may be used in combination with the carbon-based anode material.

### Anode 20

The anode 20 for the lithium secondary battery 100 may include a current collector and an anode active material layer formed on the current collector. The anode material layer includes an anode material and may further include a binder and/or a conductive material.

In an embodiment, for example, the anode material layer may include 90 wt% to 99 wt% of the anode material, 0.5 wt% to 5 wt% of the binder, and 0 wt% to 5 wt% of the conductive material.

The binder serves to attach the anode material particles to each other while attaching the anode material to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, ethylene propylene copolymers, polystyrene, polyurethane, polytetrafluoroethylene, polyvinylidene fluoride, polyethylene, polypropylene, polyamideimide, polyimide, or combinations thereof.

The aqueous binder may be selected from the group consisting of styrene-butadiene rubbers, (meth)acrylated styrene-butadiene rubbers, (meth)acrylonitrile-butadiene rubbers, (meth)acrylic rubbers, butyl rubbers, fluorinated rubbers, polyethylene oxide, polyvinyl pyrrolidone, polyepichlorohydrin, polyphosphazene, poly(meth)acrylonitrile, ethylene propylene diene copolymers, polyvinyl pyridine, chlorosulfonated polyethylene, latex, polyester resins, (meth)acryl resins, phenol resins, epoxy resins, polyvinyl alcohol, and combinations thereof.

When the aqueous binder is used as the anode binder, a cellulose-based compound capable of imparting viscosity may be further included. The cellulose-based compound may be a mixture of carboxymethylcellulose, hydroxypropyl methylcellulose, methylcellulose, or alkali metal salts thereof. The alkali metal may be Na, K, or Li.

The dry binder may be a fibrous polymeric material and may include, for example, polytetrafluoroethylene, polyvinylidene fluoride, a polyvinylidene fluoride-hexafluoropropylene copolymer, polyethylene oxide, or a combination thereof.

The conductive material imparts conductivity to the electrodes and may be any electronically conductive material that does not cause chemical change in cells under construction. In an embodiment, the conductive material may include, for example, carbon materials, such as natural graphite, artificial graphite, carbon black, acetylene black, Ketjen black, carbon fibers, carbon nanofibers, carbon nanotubes, and the like; metal-based materials in the form of metal powders or metal fibers containing copper, nickel, aluminum, silver, and the like; conductive polymers, such as polyphenylene derivatives and the like; and/or mixtures thereof.

In an embodiment, the anode current collector may be selected from copper foil, nickel foil, stainless steel foil, titanium foil, nickel foam, copper foam, a conductive metal-coated polymer base, and combinations thereof.

### Electrolyte (not shown)

In an embodiment, the electrolyte for the lithium secondary battery 100 includes a non-aqueous organic solvent and a lithium salt.

The non-aqueous organic solvent functions as a medium through which ions involved in an electrochemical reaction of a cell can move.

The non-aqueous organic solvent may be a carbonate-based solvent, an ester-based solvent, an ether-based solvent, a ketone-based solvent, an alcohol-based solvent, a non-amphoteric solvent, or a combination thereof.

The carbonate-based solvents may include any of dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), and butylene carbonate (BC).

The ester-based solvents may include any of methyl acetate, ethyl acetate, n-propyl acetate, dimethyl acetate, methyl propionate, ethyl propionate, decanolide, mevalonolactone, valerolactone, caprolactone, and the like.

The ether-based solvents may include any of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone and the like. The alcohol-based solvents may include any of ethyl alcohol, isopropyl alcohol, and the like, and non-amphoteric solvent may include nitriles, such as R-CN (where R is a straight, branched or cyclic hydrocarbon group having 2 to 20 carbon atoms and may include double bonds, aromatic rings, or ether groups); amides, such as dimethylformamide; dioxolanes, such as 1,3-dioxolane, 1,4-dioxolane; sulfolanes; and the like.

The non-aqueous organic solvent may be used alone or as a mixture thereof.

In use of the carbonate-based solvent, a mixture of a cyclic carbonate and, in an embodiment, a chained carbonate may be used, and the cyclic carbonate and the chained carbonate may be mixed in a volume ratio of 1:1 to 1:9.

The lithium salt is a substance that is soluble in an organic solvent and functions as a source of lithium ions in a battery, enabling operation of a basic lithium secondary battery while facilitating transfer of the lithium ions between the cathode and the anode. Examples of the lithium salts may include at least one selected from among LiPF₆, LiBF₄, LiSbF₆, LiAsF₆, LiClO₄, LiAlO₂, LiAlCl₄, LiPO₂F₂, LiCI, Lil, LiN(SO₃C₂F₅)₂, Li(FSO₂)₂N (lithium bis(fluorosulfonyl)imide (LiFSI), LiC₄F₉SO₃, LiN(CₓF₂ₓ₊₁SO₂)(C_{y}F_{2y+1}SO₂) (where x and y are integers of 1 to 20), lithium trifluoromethane sulfonate, lithium tetrafluoroethane sulfonate, lithium difluorobis(oxalato)phosphate (LiDFOB), and lithium bis(oxalato)borate (LiBOB).

### Separators 30

Depending on the type of lithium secondary battery 100, a separator 30 may be interposed between the cathode 10 and the anode 20. For such a separator 30, polyethylene, polypropylene, polyvinylidene fluoride, or two or more layers thereof may be used as well as mixed layers, such as a polyethylene/polypropylene bilayer separator, a polyethylene/polypropylene/polyethylene trilayer separator, a polyethylene/polyethylene/polypropylene trilayer separator, and the like.

According to an embodiment, the separator 30 may include a porous substrate and a coating layer that includes an organic material, an inorganic material, or a combination thereof on one or both surfaces of the porous substrate.

The porous substrate may be a polymer layer formed of a polymer selected from among polyolefins, such as polyethylene polypropylene, and the like, polyesters, such as polyethylene terephthalate, polybutylene terephthalate, and the like, polyacetal, polyamides, polyimides, polycarbonates, polyether ketones, polyarylether ketones, polyetherimides, polyamideimides, polybenzimidazole, polyethersulfone, polyphenylene oxides, cyclic olefin copolymers, polyphenylene sulfides, polyethylene naphthalate, glass fiber, Teflon, and polytetrafluoroethylene, copolymers thereof, or mixtures thereof.

The organic material may include a polyvinylidene fluoride polymer or a (meth)acrylic polymer.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof, without being limited thereto.

The organic material and the inorganic material may be present in a mixed state in one coating layer or may be present in the form of a stack structure of a coating layer including the organic material and a coating layer including the inorganic material.

In FIG. 1 to FIG. 4, the lithium secondary batteries 100 according to some embodiments are shown. Hereinafter, electrodes included in such secondary batteries 100 will be described. An electrode manufacturing apparatus, an electrode manufacturing method, and an electrode manufactured by the apparatus and/or method for manufacturing electrodes will be described herein. Here, the electrode described herein may include both or either of the cathode 10 and the anode 20 illustrated in FIG. 1 to FIG. 4. For convenience of description, the electrode 300 will be collectively referred to as an electrode instead of being separately referred to as the cathode 10 or the anode 20.

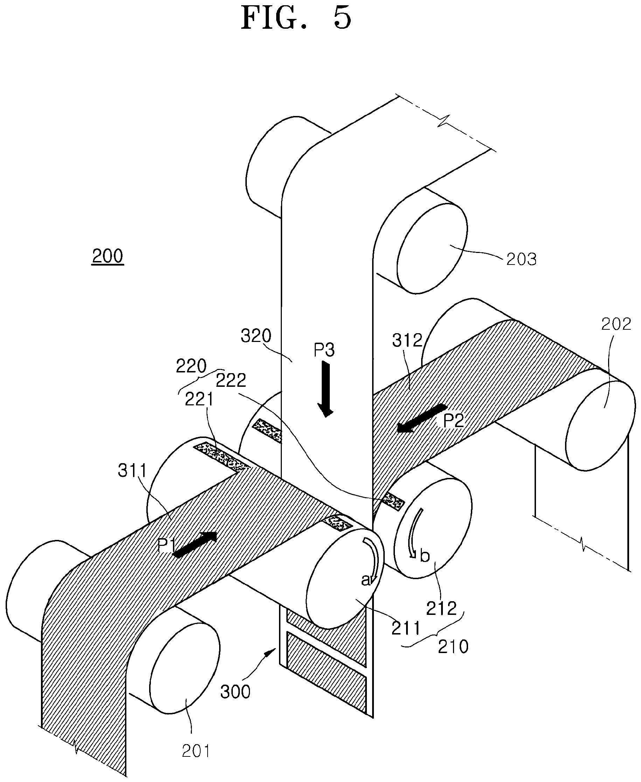

FIG. 5 is a view of an electrode manufacturing apparatus according to an embodiment of the present invention.

In FIG. 5, reference numeral 200 denotes the electrode manufacturing apparatus according to an embodiment of the present invention. In addition, in FIG. 5, reference numerals 311, 312 denote freestanding films. Further, in FIG. 5, reference numeral 320 denotes a current collector.

The electrode manufacturing apparatus 200 according to the embodiment of the present invention manufactures an electrode 300. The electrode 300 includes both or either of the cathode 10 and the anode 20 illustrated in FIG. 1 to FIG. 4. The electrode manufacturing apparatus 200 performs, for example, roll calendering and/or lamination.

Here, roll calendering is a process for producing a powder mixture into a freestanding film which is a dry electrode sheet. Lamination is a process of stacking the freestanding films on at least one surface of the current collector. These processes will be described in further detail below.

In an embodiment, to perform these processes, the electrode manufacturing apparatus 200 includes a film conveyor 201, 202, a collector conveyor 203, and rollers 210 having surface treatment regions 220 formed thereon. However, it should be understood that the electrode manufacturing apparatus 200 is not limited to the components shown in FIG. 5. The electrode manufacturing apparatus 200 may include more components other than the components shown in FIG. 5 and/or may omit at least some of the components shown in FIG. 5.

The film conveyor 201, 202 conveys freestanding films 311, 312 from some components of the electrode manufacturing apparatus 200 toward the other components thereof.

In an embodiment, the freestanding films 311, 312 are formed by applying shear force to a dry mixture. For example, the rollers 210 may apply a shear force to the dry mixture to form the freestanding films 311, 312. Alternatively, rollers not shown in FIG. 5 apply a shear force to the dry mixture to form the freestanding films 311, 312. Here, the dry mixture is prepared by mixing an electrode material, a binder, and a conductive material without a liquid medium, such as a solvent or a dispersant. The electrode material, the binder, and the conductive material may be the same as or similar to those illustrated in FIG. 1 to FIG. 4.

The freestanding films include a first film 311 conveyed toward the first roller 211 in a first direction P1 and a second film 312 conveyed toward the second roller 212 in a second direction P2. However, in an embodiment, for the freestanding films, only at least one of the first film 311 and the second film 312 may be conveyed to the rollers 210 by the film conveyor 201, 202. In this case, the freestanding films 311, 312 may be stacked on one surface of the current collector 320. However, for convenience of description, the following description will be given as to a process of stacking the freestanding films 311, 312 on both surfaces of the current collector 320 by way of example with reference to FIG. 5.

For example, the film conveyor may comprises a first film conveyor 201 and/or a second film conveyor 202. For example, the first film conveyor 201 conveys the first film 311 toward the first roller 211. For example, the second film conveyor 202 conveys the second film 312 toward the second roller 212.

The collector conveyor 203 conveys the current collector 320 from some components of the electrode manufacturing apparatus 200 toward other components thereof. The current collector 320 may be the same as or similar to the current collector illustrated in FIG. 1 to FIG. 4.

For example, the collector conveyor 203 may convey the current collector 320 toward the rollers 210 in a third direction P3. In an embodiment, the third direction P3 may be a direction perpendicular to the first direction P1 and/or the second direction P2. The first direction P1 and the second direction P2 may be opposite directions. The collector conveyor 203 may convey the current collector 320 toward a gap between the first roller 211 and the second roller 212.

The rollers 210 may perform roll calendering and/or lamination on the freestanding films 311, 312 and/or the current collector 320. To this end, the rollers 210 include the first roller 211 and the second roller 212. The rollers 210 have at least one surface treatment region 220 on at least part of the surface thereof.

The first roller 211 and the second roller 212 are spaced apart from each other. In an embodiment,, the first roller 211 and the second roller 212 are spaced apart from each other by a distance equal to a combined thickness of the one or two freestanding films 311, 312 and the current collector 320. However, the gap between the first roller 211 and the second roller 212 may be adjusted based on rolling pressure that the rollers 210 apply to the electrode 300. For example, the gap between the first roller 211 and the second roller 212 may be narrowed when the rollers 210 apply a high rolling pressure to the electrode 300. In an embodiment,, the gap between the first roller 211 and the second roller 212 may be widened when the rollers 210 apply a low rolling pressure to the electrode 300.

The first roller 211 and the second roller 212 are spaced apart from each other, as described above, while being placed adjacent to each other. In addition, the first roller 211 and the second roller 212 rotate in opposite directions. For example, the first roller 211 may rotate in a first rotational direction "a" and the second roller 212 may rotate in a second rotational direction "b". For example, when the first rotational direction "a" is the clockwise direction, the second rotational direction "b" is the counterclockwise direction.

As described above, the collector conveyor 203 conveys the current collector 320 toward a gap between the first roller 211 and the second roller 212. Specifically, the collector conveyor 203 conveys the current collector 320 toward a gap between the first film 311 conveyed by the first roller 211 and the second film 312 conveyed by the second roller 212.

As such, the rollers 210 may perform the lamination process by which the first film 311 is stacked on a surface of the current collector 320 and the second film 312 is stacked on another surface of the current collector 320 through the first roller 211 and the second roller 212 which may be adjacent to each other.

The rollers 210 may include a surface treatment regions 220 on at least part of the surface thereof. For example, the first roller 211 may have a first surface treatment region 221 formed on at least part of a surface thereof . For example, the second roller 212 may have a second surface treatment region 222 formed on at least part of the surface thereof.

The surface treatment region 220 may cause an anchoring phenomenon with respect to the freestanding films 311, 312.

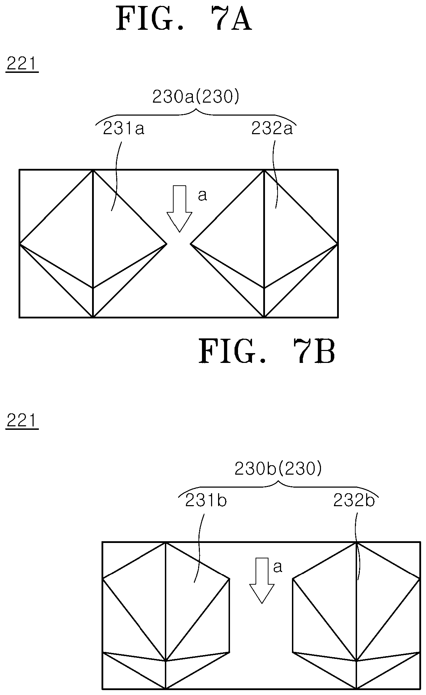

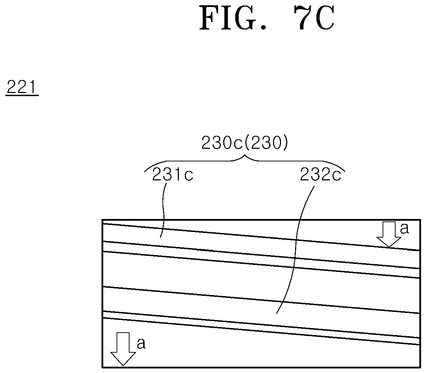

For example, the surface treatment regions 220 move in a direction of approaching the freestanding films 311, 312 to adhere to the freestanding films 311, 312 upon rotation of the rollers 210. In an embodiment,, the surface treatment region 220 includes one or more protrusions to increase adhesion to the freestanding films 311, 312. The one or more protrusions may have, for example, an uneven shape, a dome shape, or the like. The protrusions will be described in further detail with reference to FIG. 7 to FIG. 9.

Further, for example, the surface treatment regions 220 move in a direction away from the freestanding films 311, 312 to be separated from the freestanding films 311, 312 upon rotation of the rollers 210. As a result, the surface treatment regions 220 form a pattern on at least part of the freestanding films 311, 312 while being separated from the freestanding films 311, 312. For example, the surface treatment regions 220 may form an uncoated region on at least part of the freestanding films 311, 312.

In an embodiment, one of the first roller 211 and the second roller 212 may not have the surface treatment regions 220 on at least part of the surface thereof. Further, the first surface treatment region 221 and the second surface treatment region 222 may include protrusions having the same shape, pitch, and/or size, or may include protrusions having different shapes, pitches, and/or sizes.

As such, the rollers 210 may perform roll calendering through the rollers 211, 212 adjacent to each other and the surface treatment regions 220 on the rollers 210 to form the freestanding films 311, 312 and a pattern on the freestanding films 311, 312. In other words, the surface treatment regions 220 may shape the freestanding films 311, 312.

In this way, the electrode manufacturing apparatus 200 according to an embodiment of the present invention can form a dry electrode with a pattern formed on at least part of the surface thereof. Further, the electrode manufacturing apparatus 200 can form a dry electrode plate applicable to various cell form factors.

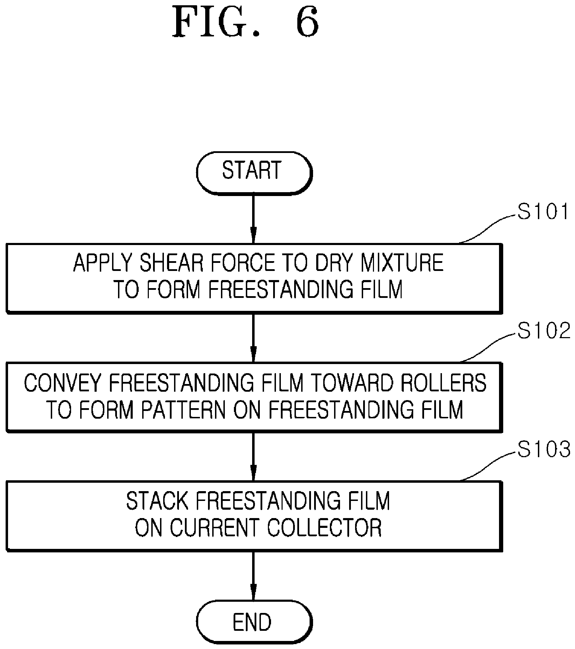

FIG. 6 is a flowchart illustrating an electrode manufacturing method according to an embodiment of the present invention.

FIG. 6 illustrates a method of manufacturing an electrode using the electrode manufacturing apparatus 200 illustrated in FIG. 5. However, each of the tasks or steps illustrated in FIG. 6 may not be performed only by the electrode manufacturing apparatus 200 illustrated in FIG. 5. For example, the electrode manufacturing method may be performed by facilities, equipment, or a system including the same capable of performing each of the tasks or steps illustrated in FIG. 6.

The electrode manufacturing method according to an embodiment includes a task or step of applying a shear force to a dry mixture to form freestanding films 311, 312 (Step S101). As illustrated in FIG. 5, the rollers 210 may apply a shear force to the dry mixture to form the freestanding films 311, 312. The description of the task or Step S101 may be the same as or similar to that illustrated in FIG. 5.

The electrode manufacturing method according to an embodiment includes a task or step of conveying the freestanding films 311, 312 toward the roller 210 to form a pattern on the freestanding films 311, 312 (Step S102). The surface treatment regions 220 formed on the surfaces of the rollers 210 may form a pattern on the freestanding films 311, 312 through an anchoring effect. The detailed description of the task or Step S102 may be the same as or similar to that illustrated in FIG. 5.

The electrode manufacturing method according to an embodiment includes a task or step of stacking the freestanding films 311, 312 on a current collector 320 (Step S103). The rollers 210 apply pressure to the current collector 320 and the freestanding films 311, 312 placed on both surfaces (or on one surface) of the current collector 320 through the first roller 211 and the second roller 212. As a result, the rollers 210 stack the freestanding films 311, 312 on one or both surfaces of the current collector 320 to form an electrode 300. The description of task or Step S103 may be the same as or similar to that illustrated in FIG. 5.

However, depending on the location of the surface treatment regions 220 on the surfaces of the rollers 210, tasks or Steps S102 and S103 may be performed sequentially, concurrently (e.g., simultaneously), and/or in a reverse order.

In this way, the electrode manufacturing method according to an embodiment of the present invention can form a dry electrode with a pattern formed on at least part of the surface thereof. Further, the electrode manufacturing method can form a dry electrode plate applicable to various cell form factors.

FIG. 7A to FIG. 7C are views of protrusions according to some embodiments of the present invention.

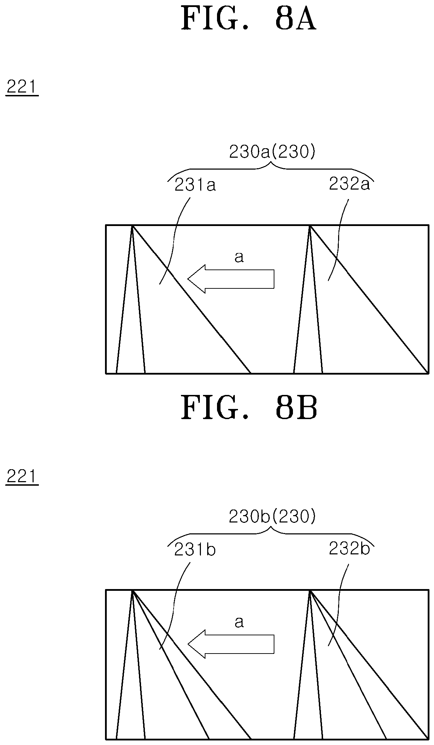

FIG. 8A to FIG. 8C are views of protrusions according to some embodiment of the present invention.

As described with reference to FIG. 5 and FIG. 6, the surface treatment region 220 includes one or more protrusions 230. For example, the surface treatment region 220 may form an uneven shape and/or a dome shape through the one or more protrusions 230.

In an embodiment, the protrusions 230 have at least one shape among a polygonal cone shape including at least one of a triangular cone shape, a pyramidal shape, a pentagonal cone shape, and a hexagonal cone shape; a screw shape; and a conical shape.

However, the protrusions 230 are not limited thereto and may be formed in any shape tapered from a lower portion thereof toward an upper portion thereof. In an embodiment, the protrusions 230 may be formed in any shape so long as the protrusions 230 have a pointed upper end even in a case in which the protrusions 230 are not tapered from the lower portion toward the upper portion thereof.

As such, the protrusions 230 may have a pointed shape or a shape, which is narrower at the upper portion than at the lower portion, to increase adhesion to the freestanding films 311, 312. Here, the lower portion refers to a portion close to the surface of the roller 210 and the upper portion refers to a portion located away from the surface of the rollers 210. As the upper portion is located away from the surface of the roller 210, the lower portion may be located closer to the freestanding films 311, 312 facing the rollers 210 than the lower portion. That is, the upper portion of the protrusion 230 may be brought into contact with the freestanding films 311, 312 and then the lower portion thereof may be brought into contact with the freestanding films 311, 312.

FIG. 7A to FIG. 7C and FIG. 8A to FIG. 8C illustrate various shapes of the protrusions 230. FIG. 7A to FIG. 7C are schematic top views of the protrusions 230 and FIG. 8A to 8C are schematic side views of the protrusions 230.

Referring to FIG. 7A, for example, protrusions 230a may be formed in a pyramidal shape. For example, a first protrusion 231a and a second protrusion 232a may have the same pyramidal shape and may be spaced apart from each other by a distance (e.g., predetermined distance).

In an embodiment, the protrusions 230a may be formed to have a portion biased to a first side, as shown in FIG. 8A. The expression "formed to have a portion biased" (or "formed biased") means that the center of gravity of the protrusion 230a is not on a same vertical line as the center of gravity of a bottom surface of the protrusion 230a with respect to the surface of the rollers 210. In another embodiment, for example, when the upper portion of the protrusion 230a includes a pointed end, as shown in FIG. 8A, the pointed end of the upper portion of the protrusion 230a and the center of gravity of the bottom surface of the protrusion 230a are not on a same vertical line with respect to the surface of the rollers 210.

Here, a direction in which the protrusion 230a is biased to a first side is, for example, a rotational direction of the rollers 210. For example, for the first roller 211 illustrated in FIG. 5, the direction in which the protrusion 230a is biased to a first side is the first rotational direction "a".

In another embodiment, protrusions 230b may be formed, for example, in a hexagonal cone shape, as shown in FIG. 7B. For example, a first protrusion 231b and a second protrusion 232b may have a same hexagonal cone shape and may be spaced apart from each other by a distance (e.g., a predetermined distance). Further, like the protrusions 230a, the protrusions 230b may be formed to have a portion biased to a first side, as shown in FIG. 8B.

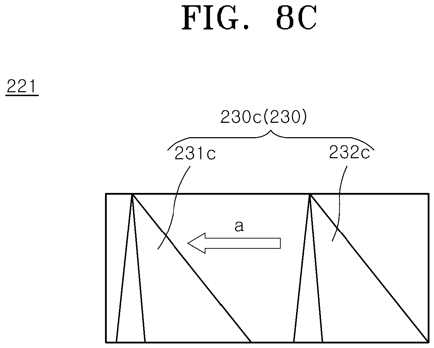

In another embodiment, as shown in FIG. 7C, for example, a protrusions 230c may be formed in a screw shape. For example, a first protrusion 231c and a second protrusion 232c have the same thread shape and may be spaced a distance (e.g., a predetermined distance) apart from each other in a lateral direction. In addition, like the protrusions 230a and/or the protrusions 230b, the protrusion 230c may be formed to have a portion biased to one side, as shown in FIG. 8C.

As illustrated in FIG. 7A to FIG. 7C and FIG. 8A to FIG. 8C, in an embodiment, protrusions 230 may be formed to have a portion biased in the rotational direction of the rollers 210. With such a shape, the protrusions 230 can further improve adhesion (e.g., mechanical adhesion) to the freestanding films 311, 312. However, as described above, the shapes of the protrusions 230 shown in FIG. 7A to FIG. 7C and FIG. 8A to FIG. 8C are provided for illustration and thus all or some of the one or more protrusions 230 may not be formed to have a portion biased to a first side.

In an embodiment, although not shown in FIG. 5 to FIG. 8C, the surface treatment region 220 may further include a cutting portion (not shown) at a proximal end and/or a distal end thereof to cut the freestanding films 311, 312. In an embodiment, the cutting portion may be formed as a knife shaped hurdle. With this structure, the cutting portion allows the surface treatment regions 220 to more easily form a pattern on the freestanding films 311, 312.

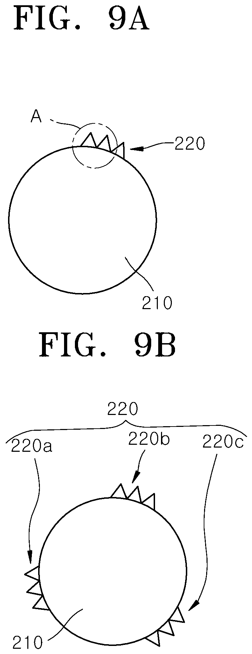

Referring to FIG. 7A to FIG. 7C and FIG. 8A to FIG. 8C, the shapes of the protrusions 230 are described above. Next, referring to FIG. 9A to FIG. 9C, a relationship between the surface treatment regions 220 and a relationship between the protrusions 230 will be described.

FIG. 9A to FIG. 9C are views of a roller and a surface treatment region according to some embodiments of the present invention.

According to an embodiment, the rollers 210 may include one or more surface treatment regions 220 on at least part of a surface thereof.

For example, as shown in FIG. 9A, the rollers 210 may include a single surface treatment region 220.

In another embodiment, for example, as shown in FIG. 9B, the rollers 210 may include a plurality of surface treatment regions 220. In an embodiment, when the rollers 210 include a plurality of surface treatment regions 220, the surface treatment regions 220 may be arranged at a same interval. In an embodiment, for example, the plurality of surface treatment regions 220 includes a surface treatment region a 220a, a surface treatment region b 220b, and a surface treatment region c 220c. In an embodiment, a distance between the surface treatment region a 220a and the surface treatment region b 220b may be the same as a distance between the surface treatment region a 220a and the surface treatment region c 220c and a distance between the surface treatment region b 220b and the surface treatment region c 220c. However, the distances between the surface treatment regions 220 may be different from each other in all or at least some of the surface treatment regions.

A structure in which the first roller 211 and the second roller 212 include the protrusions 230 with different shapes is described above with reference to FIG. 5. In an embodiment, the first roller 211 and the second roller 212 may have different numbers of surface treatment regions 220 on the surfaces thereof. For example, the first roller 211 may include one surface treatment region 220, as shown in FIG. 9A and the second roller 212 may include a plurality of surface treatment regions 220, as shown in FIG. 9B. As such, for the electrode manufacturing apparatus 200, a variety of shapes and numbers of surface treatment regions 220 and/or protrusions 230 may be provided depending on the characteristics of the electrode 300 to be manufactured (for example, depending on the length of the uncoated region of the electrode 300 corresponding to the anode 10).

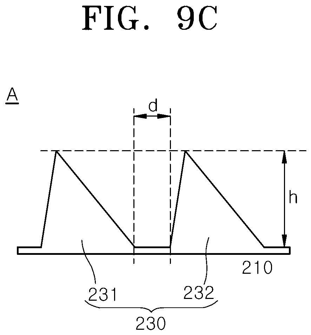

FIG. 9C is a schematic enlarged view of the protrusions 230 formed on the rollers 210. Referring to FIG. 9C, the protrusions 230 in a surface treatment region 220 and a relationship between two or more protrusions 230 will be described.

As shown in FIG. 9C, the protrusions 230 are formed to a height (e.g., a predetermined height) "h" from the surface of the rollers 210. The predetermined height "h" may be in a range of, for example, 2µm to 150µm. According to another embodiment, the height "h" may be in a range of 20µm to 80µm.

Further, as shown in FIG. 9C, the plurality of protrusions is formed spaced apart from each other by a distance (e.g., a predetermined distance) "d". For example, the first protrusion 231 and the second protrusion 232 are separated a distance "d" from each other. Here, the distance between the first protrusion 231 and the second protrusion 232 refers to a distance between a side of the first protrusion 231 and a side of the second protrusion 232. Here, the side of the first protrusion 231 refers to a side close to the second protrusion 232 and the side of the second protrusion 232 refers to a side close to the first protrusion 231. That is, the distance between the first protrusion 231 and the second protrusion 232 is the closest straight line distance between the first protrusion 231 and the second protrusion 232. In an embodiment, the distance "d" is in the range of, for example, 1µm to 100µm. According to another embodiment, the distance "d" may be in a range of 20µm to 70µm.

With this structure, the protrusions 230 form a pattern on the freestanding films 311, 312 without damage to the freestanding films 311, 312 and/or the current collector 320. However, the height "h" may be varied depending on the thickness of the electrode 300 to be manufactured and/or the thickness and properties of the freestanding films 311, 312.

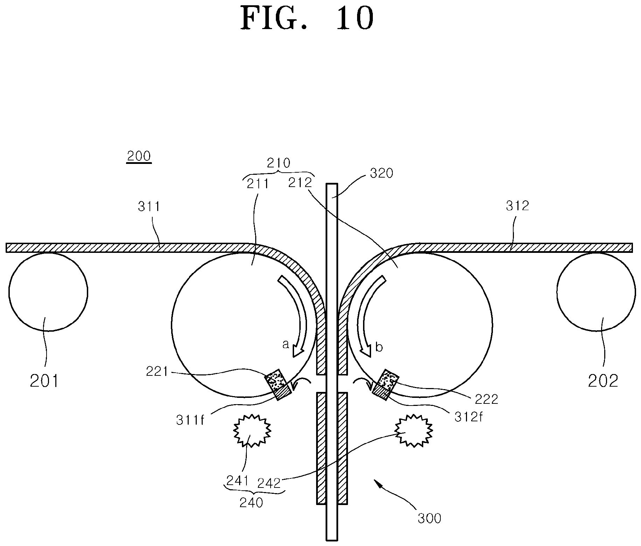

FIG. 10 is a view of an electrode manufacturing apparatus according to an embodiment of the present invention.

As described with reference to FIG. 5 to FIG. 9C, the electrode manufacturing apparatus 200 according to an embodiment includes the rollers 210. In addition, the rollers 210 may have surface treatment regions 220 formed on surfaces thereof. Further, the surface treatment region 220 may include one or more protrusions 230, for example, as illustrated in FIG. 5 to FIG. 9C. With this configuration, the electrode manufacturing apparatus 200 forms a pattern on the freestanding films 311, 312.

In an embodiment, the rollers 210 are attached to and then released from the freestanding films 311, 312 by an anchoring effect such that at least some portions of the freestanding films 311, 312 are detached from the freestanding films 311, 312 to be transferred to the surfaces of the rollers 210.

For example, a first surface treatment region 221 allows a first transfer film 311f to be transferred from the first film 311 to the first roller 211. In addition, a second surface treatment region 222 allows a second transfer film 312f to be transferred from the second film 312 to the second roller 212. In this way, the transfer films 311f, 312f, which are part of the freestanding films 311, 312, are detached from the freestanding films 311, 312 to form a pattern on the freestanding films 311, 312. In other words, the freestanding films 311, 312, of which the transfer films 311f, 312f have been removed form a pattern on the current collector 320.

Here, a method of handling the transfer films 311f, 312f transferred to the roller 210 may be needed.

In an embodiment, the electrode manufacturing apparatus 200 may further include film collectors 240 that may include first and second film collectors 241, 242. The first and second film collectors 241, 242 remove the transfer films 311f, 312f from the rollers 210 and/or collect the transfer films 311f, 312f.

The first and second film collectors 241, 242 may be disposed, for example, below the rollers 210. In an embodiment, the film controllers 240 may be disposed below the roller 210 to be spaced a certain distance apart from the electrode 300. Here, the film collectors 240 may be disposed at a location that facilitates collection of the transfer films 311f, 312f from the rollers 210.

In an embodiment, for example, the first film collector 241 may be disposed below the first roller 211 and collects the first transfer film 311f transferred onto the first roller 211 and the second film collector 242 may be disposed below the second roller 212 and collects the second transfer film 312f transferred onto the second roller 212. In an embodiment in which the surface treatment region 220 is formed only on one of the two rollers, the film collector 240 may be formed only below the roller on which the surface treatment region 220 is formed.

In an embodiment, each of the film collectors 241, 242 may include, for example, a suctioning device that suctions the transfer films 311f, 312f via a vacuum. In another embodiment, each of the film collectors 241, 242 may include, for example, a brush that can sweep the transfer films 311f, 312f to collect the transfer films 311f, 312f in a certain direction. However, it should be understood that the film collectors 241, 242 are not limited thereto and may have any suitable configuration that can remove or collect the transfer films 311f, 312f from the rollers 210.

With this configuration, the electrode manufacturing apparatus 200 according to an embodiment allows the rollers 210 to operate continuously without being stopped or hindered by the transfer films 311f, 312f. In addition, the electrode manufacturing apparatus 200 allows the transfer films 311f, 312f to be collected and recycled for manufacture of the freestanding films 311, 312. In other words, the electrode manufacturing apparatus 200 enables resource recycling, thereby contributing to environmental and cost benefits.

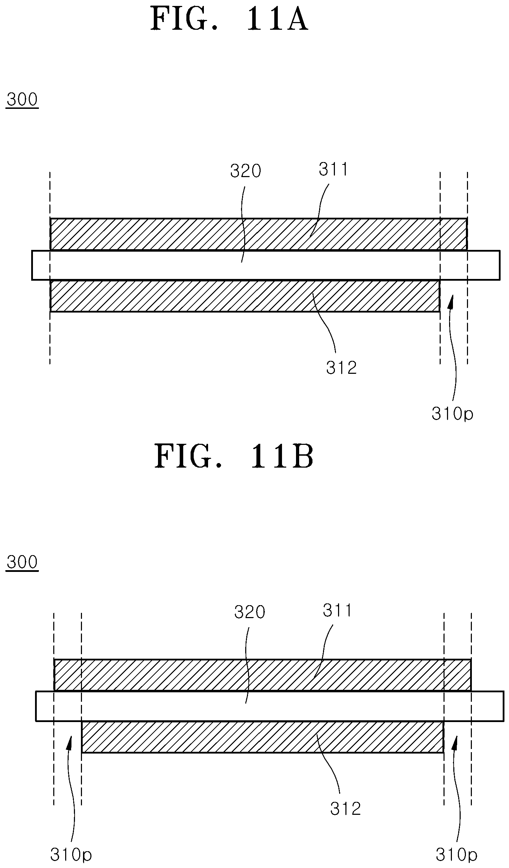

FIG. 11A and FIG. 11B are views of an electrode according to some embodiments of the present invention.

FIG. 11A and FIG. 11B shows an electrode 300 manufactured by the electrode manufacturing apparatus 200 and/or the electrode manufacturing method illustrated in FIG. 5 to FIG 10.

Referring to FIG. 11A and FIG. 11B, the electrode 300 according to the embodiment includes a current collector 320 and freestanding films 311, 312 formed on one or both surfaces of the current collector 320. Here, each of the freestanding films 311, 312 has a pattern on a surface thereof.

In an embodiment, for example, as shown in FIG. 11A and FIG. 11B, a pattern 310p may be formed only on the freestanding film 312 stacked on a surface of the current collector among the freestanding films 311, 312 stacked on both surfaces of the current collector. In an embodiment, the distance between the patterns 310p and/or the shape of the pattern 310p formed on the freestanding films 311, 312 may correspond to the distance between the treated films 311f, 312f shown in FIG. 10. In an embodiment, a distance between the patterns 310p and/or the shape of the pattern 310 formed on the freestanding films 311, 312 corresponds to the distance between the protrusions 230 and/or the shape of the protrusions 230 shown in FIG. 10. In an embodiment, the pattern may be formed on the freestanding films 312 stacked on both surfaces of the current collector among the freestanding films 311, 312 formed on both surfaces of the current collector, as shown in FIG. 11A and FIG. 11B.

As such, the electrode 300 according to an embodiment may include the pattern on a surface thereof. Accordingly, the electrode 300 according to an embodiment may be applied to a variety of cell form factors.

As such, the electrode manufacturing apparatus 200 and/or the electrode manufacturing method according to one or more embodiments of the present invention provide a dry electrode having a pattern formed on the surface thereof. Further, a battery cell 100 (including, for example, a secondary battery, as described in FIG. 1 to FIG. 11C) according to one or more embodiments of the present invention may include a dry electrode having such a pattern formed thereon. Furthermore, the battery cell 100 according to the embodiment of the present invention and/or a battery module including the battery cells 100 may be applied to automobiles, mobile phones, and/or various forms of electrical devices, and the like, without being limited thereto.

Although the present invention has been described with reference to some example embodiments and drawings illustrating aspects thereof, the present invention is not limited thereto. Various modifications and variations can be made by a person skilled in the art to which the present invention belongs within the scope of the invention and the claims and equivalents thereto.

## Claims

1. An electrode manufacturing apparatus (200) comprising:
rollers (210) comprising a first roller (211) having at least one first surface treatment region (221) on at least part of a surface thereof and a second roller (212) spaced apart from the first roller (211) and configured to rotate in a different direction from the first roller (211);
a film conveyor configured to convey a freestanding film (311, 312) toward the first roller (211); and
a collector conveyor configured to convey a current collector (320) toward a gap between the first roller (211) and the second roller (212) to stack the freestanding film (311, 312) on a surface of the current collector (320) by the rollers (210).

2. The electrode manufacturing apparatus (200) according to claim 1, wherein the first surface treatment region (221) comprises a plurality of protrusions (230) to form a pattern (310p) on at least part of the freestanding film (311, 312).

3. The electrode manufacturing apparatus (200) according to claim 2, wherein each of the protrusions (230) is tapered from a lower portion thereof toward an upper portion thereof.

4. The electrode manufacturing apparatus (200) according to claim 2 or 3, wherein the protrusions (230) have a height of 2µm to 150µm.

5. The electrode manufacturing apparatus (200) according to any one of claims 2 to 4, wherein the protrusions (230) are arranged at an interval of 1µm to 100µm.

6. The electrode manufacturing apparatus (200) according to any one of claims 2 to 5, wherein the protrusions (230) are formed in at least one shape among a polygonal cone shape, a screw shape, and a conical shape, the polygonal cone shape comprising at least one of a triangular cone shape, a pyramidal shape, a pentagonal cone shape, and a hexagonal cone shape.

7. The electrode manufacturing apparatus (200) according to any one of claims 2 to 6, wherein the protrusions (230) are formed with an upper portion thereof biased to a first side.

8. The electrode manufacturing apparatus (200) according to claim 7, wherein the first side is a rotational direction of the rollers (210).

9. The electrode manufacturing apparatus (200) according to any one of claims 1 to 8, wherein the second roller (212) has a second surface treatment region (222) formed on at least part of a surface thereof and is configured to form a pattern (310p) on at least part of the freestanding film (311, 312).

10. The electrode manufacturing apparatus (200) according to any one of claims 1 to 9, further comprising a film collector (240) configured to collect the freestanding film (311, 312) treated by the rollers (210).

11. The electrode manufacturing apparatus (200) according to claim 10, wherein the film collector (240) comprises at least one of a suctioning device configured to suction the treated film (311f, 312f) and a brush configured to sweep the treated film (311f, 312f).

12. An electrode manufacturing method comprising:
applying shear force to a dry mixture to form a freestanding film (311, 312);
forming a pattern (310p) on the freestanding film (311, 312) by conveying the freestanding film (311, 312) toward a first roller (211) having a surface treatment region (220) formed thereon; and
conveying a current collector (320) toward the first roller (211) and a second roller (212) placed adjacent to the first roller (211) to stack the freestanding film (311, 312) on the current collector (320).

13. The electrode manufacturing method according to claim 12, wherein the step of forming a pattern (310p) on the freestanding film (311, 312) comprises:
attaching the surface treatment region (220) to the freestanding film (311, 312); and
separating the surface treatment region (220) from the freestanding film (311, 312) to form the pattern (310p).

14. The electrode manufacturing method according to claim 12 or 13, further comprising:
collecting a treated film (311f, 312f) detached from the freestanding film (311, 312) by the surface treatment region (220).

15. An electrode manufactured by the apparatus according to any one of claims 1 to 11, the electrode (300) comprising: a current collector (320); and a freestanding film (311, 312) stacked on the current collector (320) and having a pattern (310p) formed on a surface thereof.
